# FASCICULE DE BREVET EUROPEEN

(11) **EP 2 775 029 B1**
(45) Date de publication et mention de la délivrance du brevet: **21.03.2018**
(21) Numéro de dépôt: 14154082.3
(22) Date de dépôt: 06.02.2014
(51) Int. Cl.: D06F 75/12, A47L 11/34, A47L 11/40

(54) **Appareil de repassage comprenant une base génératrice de vapeur reliée par un cordon à un fer à repasser**
Bügelgerät, das eine dampferzeugende Station umfasst, die über eine Leitung mit dem Bügeleisen verbunden ist
Ironing appliance including a steam-generating base connected by a cord to an iron

(30) Priorité: 08.02.2013 FR 1351105
(43) Date de publication de la demande: 10.09.2014
(73) Titulaire: SEB S.A., 69130 Ecully (FR)
(72) Inventeur: Metay, Cédric, 38270 Primarette (FR); Loprete, Stéphane, 38460 Verna (FR); Chelle, Jacky, 38550 Auberives-sur-Vareze (FR)
(74) Mandataire: Bourrières, Patrice

(56) Documents cités:
- EP-A1- 1 619 291
- EP-A2- 0 719 516
- US-A1- 2002 182 005
- US-A1- 2003 208 872
- US-A1- 2005 189 764

## Description

La présente invention se rapporte à un appareil de repassage domestique comprenant une base génératrice de vapeur reliée par un cordon à un fer à repasser dans lequel le cordon comporte un conduit pour le transport de la vapeur.

Il est connu, sur un tel appareil, de relier le conduit de vapeur à une électrovanne fixée sur une cuve pour la génération de vapeur sous pression en venant emmancher à force le conduit de vapeur sur un tube de raccordement porté par l'électrovanne, puis en plaçant un collier de serrage autour du conduit de vapeur, dans la zone recevant le tube de raccordement, de manière à sécuriser la fixation du conduit de vapeur sur le tube de raccordement.

Une telle opération de raccordement nécessite cependant beaucoup d'efforts de la part de l'opérateur, ce dernier devant effectuer l'emmanchage à force du conduit sur le tube de raccordement, puis utiliser une pince pour placer le collier de serrage sur le tube de raccordement. De plus, cette opération est habituellement réalisée lors du processus de montage, alors que la cuve est déjà en place dans le boitier de l'appareil de sorte que l'accessibilité au tube de raccordement est limitée.

En conséquence, une telle opération de montage présente l'inconvénient de nécessiter beaucoup de temps et de pouvoir générer des troubles musculo-squelettiques chez l'opérateur.

Il est connu de la demande de brevet US 2003/208872, un appareil de repassage comprenant un conduit pour le transport de la vapeur qui est connecté à une base de manière amovible au moyen d'un raccord rapide comprenant des moyens de verrouillage automatique. Cependant, un tel raccord est encombrant et n'est pas adapté pour relier un conduit de vapeur à une électrovanne portée par une cuve pour la génération de vapeur sous pression.

Il est connu des documents US2002/182005 et US2005/189764 des raccords rapides avec une agrafe élastique venant s'engager élastiquement dans une gorge du raccord pour assurer son immobilisation. Toutefois, ces documents se rapportent au domaine du transport des liquides dans les véhicules automobiles et ne se rapporte pas à un raccord destiné à relié un conduit de vapeur sur un appareil de repassage.

Aussi, un but de la présente invention est de proposer un appareil de repassage pour la production de vapeur sous pression qui remédie à ces inconvénients.

A cet effet, l'invention a pour objet un appareil de repassage comprenant une base génératrice de vapeur reliée par un cordon à un fer à repasser, le cordon comportant un conduit pour le transport de la vapeur, caractérisé en ce que le conduit est connecté à la base par un raccord rapide comprenant un corps et une tête susceptible d'être reçue axialement dans une cavité du corps, le raccord comprenant des moyens de verrouillage automatique de la tête dans le corps dans une position de verrouillage dans laquelle la tête est reliée de manière étanche au corps du raccord.

Une telle caractéristique permet un montage simplifié de l'appareil, réduisant ainsi le risque de traumatisme musculo-squelettique chez l'opérateur ayant la charge de réaliser la connexion du conduit sur la base. De plus, une telle caractéristique permet également de gagner du temps dans la phase d'assemblage de l'appareil.

Selon encore une autre caractéristique de l'invention, la tête du raccord est portée par une électrovanne fixée sur une cuve pour la génération de vapeur sous pression et le corps du raccord est solidaire d'une extrémité du conduit pour le transport de la vapeur.

Selon encore une autre caractéristique de l'invention, le corps du raccord comporte un embout de connexion sur lequel l'extrémité du conduit est emmanchée à force, l'embout de connexion comprenant un canal débouchant dans la cavité du corps.

Selon encore une autre caractéristique de l'invention, les moyens de verrouillage automatique comprennent une agrafe élastique portée par le corps du raccord, l'agrafe élastique comportant deux branches transversales de verrouillage venant s'engager élastiquement dans une gorge ménagée sur la tête du raccord.

Une telle caractéristique permet d'obtenir un verrouillage simple et économique du raccord. Elle présente également l'avantage de permettre un verrouillage sûr du raccord, l'opérateur étant informé du bon verrouillage du raccord par le bruit produit par l'engagement des branches de l'agrafe dans la gorge.

Selon une autre caractéristique de l'invention, la tête comporte une partie tronconique en amont de la gorge.

Une telle caractéristique permet de créer un point où l'effort à exercer est légèrement plus important, lors du déplacement axial de la tête dans le corps du raccord, permettant d'informer l'opérateur sur l'imminence du verrouillage de l'agrafe élastique dans la gorge.

Selon encore une autre caractéristique de l'invention, le corps comporte deux fentes dans lesquelles viennent s'engager les deux branches transversales de l'agrafe élastique, l'agrafe élastique pouvant occuper une position de verrouillage dans laquelle les deux branches transversales sont sensiblement parallèles entre elles et s'étendent au travers de la cavité du corps.

Selon encore une autre caractéristique de l'invention, l'agrafe élastique peut occuper une position de déverrouillage dans laquelle les branches transversales sont écartées et s'étendent en dehors de la cavité.

Une telle caractéristique permet un démontage aisé du raccord.

Selon une autre caractéristique de l'invention, l'agrafe élastique comporte une boucle, dans le prolongement des branches transversales, faisant saillie en dehors du corps, l'agrafe élastique pouvant être amenée de la position de verrouillage à la position de déverrouillage en exerçant une traction sur la boucle.

Une telle caractéristique présente l'avantage de garantir une très bonne flexibilité à l'agrafe élastique permettant d'obtenir un effort réduit lors du verrouillage et déverrouillage du raccord.

Selon une autre caractéristique de l'invention, les branches transversales comportent une extrémité recourbée prenant appui sur une surface externe du corps.

Une telle caractéristique permet à la surface externe du corps d'interagir sur les branches transversales de l'agrafe lors du déplacement de l'agrafe de la position de verrouillage à la position de déverrouillage. Une telle caractéristique permet également d'offrir une information visuelle sur le positionnement de l'agrafe élastique de sorte que l'opérateur peut s'assurer visuellement du bon verrouillage ou déverrouillage du raccord.

Selon encore une autre caractéristique de l'invention, le corps comporte une butée en saillie sur laquelle l'extrémité recourbée des branches transversales vient prendre appui lorsque l'agrafe élastique occupe la position de déverrouillage.

Une telle caractéristique présente l'avantage de limiter la course de l'agrafe élastique entre les positions de verrouillage et de déverrouillage.

Selon encore une autre caractéristique de l'invention, les butées sont disposées de telle sorte que les extrémités recourbées des branches transversales se trouvent dans une position diamétralement opposée par rapport à l'axe longitudinal de la cavité lorsque les extrémités recourbées sont en appui contre la butée.

Une telle caractéristique permet d'obtenir un écartement maximum des branches transversales dans la position de déverrouillage.

Selon une autre caractéristique de l'invention, le corps du raccord comporte au moins un joint d'étanchéité.

Selon une autre caractéristique de l'invention, le corps du raccord comprend deux joints d'étanchéités toriques séparés l'une de l'autre par une entretoise et maintenus dans la cavité du corps par un anneau élastique.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de repassage selon un mode particulier de réalisation de l'invention,
- la figure 2 est une vue en côté de la cuve de l'appareil de repassage de la figure 1 ;
- la figure 3 est une vue en perspective de l'électrovanne et de l'extrémité du conduit de vapeur avant leur raccordement ;
- la figure 4 est une vue en coupe du raccord reliant l'électrovanne au conduit de vapeur selon la ligne IV-IV de la figure 2 ;
- la figure 5 est une vue en perspective éclatée du corps du raccord de la figure 4 ;
- les figures 6A et 6B sont des vues de face du corps du raccord lorsque l'agrafe élastique occupe respectivement la position de verrouillage et la position de déverrouillage ;
- les figures 7 et 8 représentent différentes vues en perspective du corps du raccord avec l'agrafe élastique en position de verrouillage.

Seuls les éléments nécessaires à la compréhension de l'invention ont été représentés. Pour faciliter la lecture des dessins, les mêmes éléments portent les mêmes références d'une figure à l'autre.

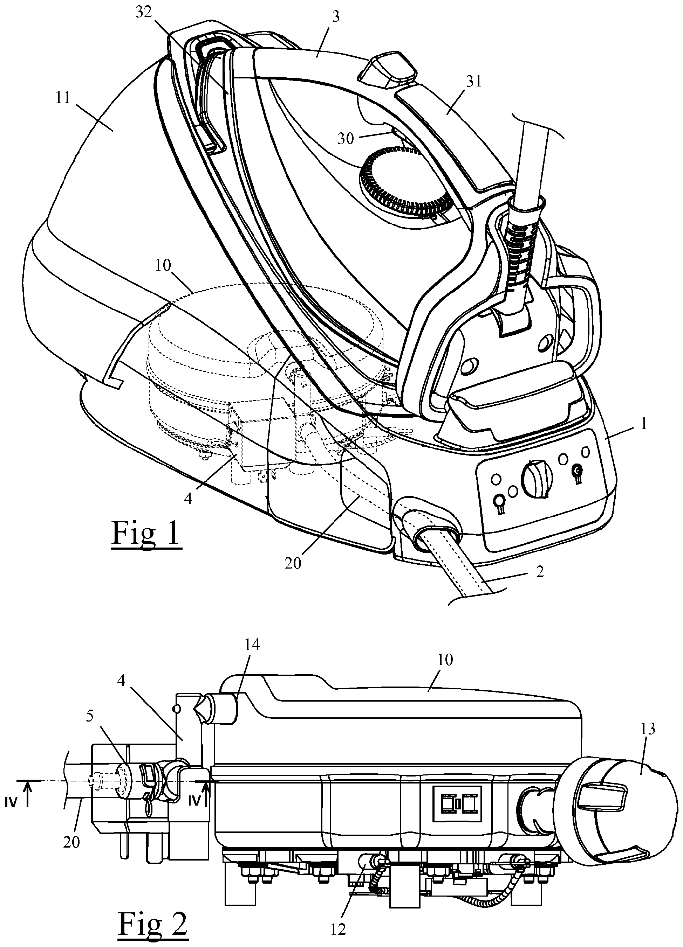

La figure 1 représente un appareil de repassage domestique comportant une base 1 reliée par un cordon 2 à un fer à repasser 3, la base 1 comportant une cuve 10 pour la génération de vapeur sous une pression de l'ordre de 4 à 6 bars et un réservoir 11 d'eau alimentant la cuve 10 par l'intermédiaire d'une pompe, non visible sur les figures.

Conformément à la figure 2, la cuve 10 comporte des moyens de chauffe avantageusement constitués par une résistance chauffante 12, en forme de U, disposée sous le fond de la cuve 10 et comprend dans sa partie basse, un orifice de vidange fermé par un bouchon 13.

La cuve 10 comporte également un orifice de sortie de vapeur 14 ménagé dans la partie haute de la cuve 10 et sur lequel est fixé une électrovanne 4, l'électrovanne 4 comportant un orifice d'échappement relié à un conduit 20 de vapeur, avantageusement réalisé en matériau EPDM (éthylène-propylène-diène monomère), intégré dans le cordon 2.

L'électrovanne 4 est, de manière connue en soi, commandée à l'ouverture au moyen d'une gâchette 30, visible sur la figure 1, disposée sous une poignée de préhension 31 du fer à repasser, l'ouverture de l'électrovanne 4 permettant à la vapeur produite par la base 1 de s'échapper au travers du conduit 20, puis au travers du fer à repasser 3 avant de sortir par des trous de sortie de vapeur ménagés dans une semelle 32.

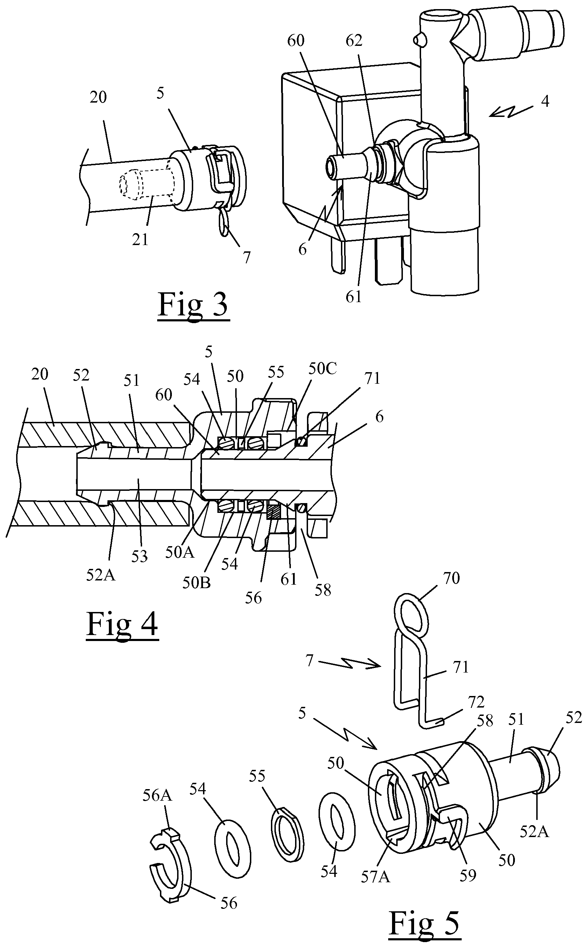

Conformément aux figures 3 et 4, l'électrovanne 4 est reliée au conduit 20 par un raccord rapide comportant un corps 5 solidaire de l'extrémité du conduit 20 de vapeur et une tête 6 de raccordement portée par l'électrovanne 4, le corps 5 du raccord étant avantageusement réalisé en matériau polyamide renforcé de fibres et comportant une cavité 50 présentant une extrémité ouverte dans laquelle la tête 6 est susceptible d'être reçue axialement.

La tête 6 est avantageusement réalisée en laiton et comporte une partie tubulaire 60 d'extrémité, présentant une longueur de l'ordre de 1 cm et un diamètre externe de l'ordre de 5 mm, venant s'engager dans la cavité 50 du corps 5, la tête 6 comportant, dans le prolongement de la partie tubulaire 60, une partie tronconique 61 disposée en amont d'une gorge 62 ménagée au pied de la tête 6 de raccordement.

Conformément à la figure 5, le corps 5 du raccord comporte, à l'opposé de l'extrémité ouverte de la cavité 50, un embout de connexion 51 tubulaire sur lequel le conduit 20 est emmanché à force, l'embout de connexion 51 comportant, de manière connue en soi, une extrémité tronconique 52 favorisant l'emmanchement du conduit 20 de vapeur et présentant un épaulement 52A formant un élément de rétention du conduit 20 sur l'embout de connexion 51.

Comme on peut le voir sur la figure 4, l'embout de connexion 51 renferme un canal 53 débouchant axialement dans la cavité 50, cette dernière comportant avantageusement une partie terminale 50A, jouxtant l'embout de connexion 51, présentant un diamètre très légèrement supérieur au diamètre de la partie tubulaire 60 de la tête 6, une partie intermédiaire 50B de plus grand diamètre recevant des moyens d'étanchéité 54 et une partie primaire 50C, de diamètre encore plus important, comprenant des moyens de verrouillage 7 de la tête 6.

A titre d'exemple, la partie terminale 50A de la cavité présente un diamètre de l'ordre de 5 mm, la partie intermédiaire 50B présente un diamètre de l'ordre de 8 mm et la partie primaire 50C présente un diamètre de l'ordre de 10 mm.

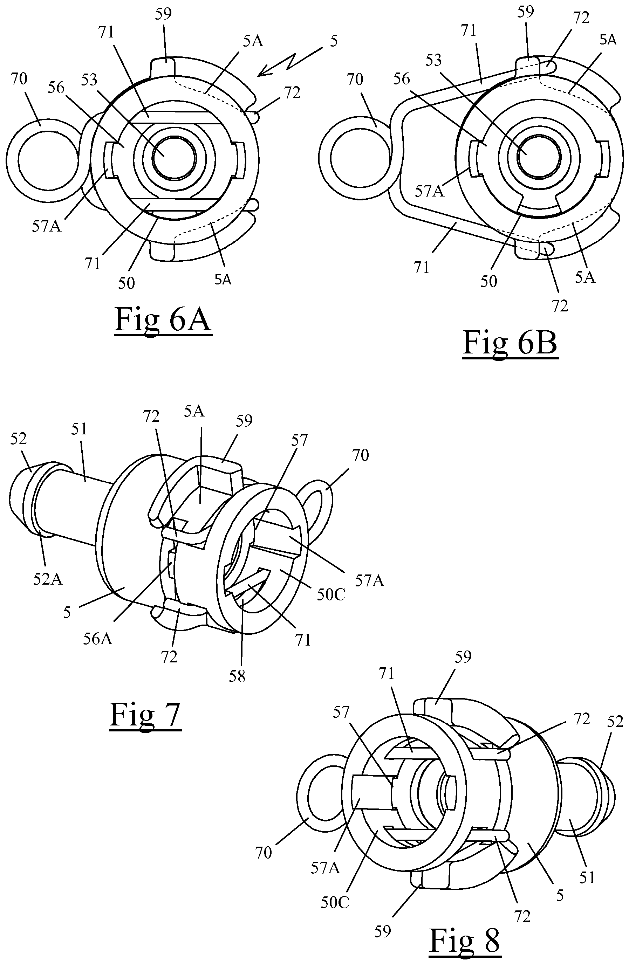

Conformément aux figures 4 et 5, les moyens d'étanchéité 54 comprennent deux joints d'étanchéité 54 toriques séparés l'un de l'autre par une entretoise 55, les deux joints d'étanchéité 54 et l'entretoise 55 étant immobilisés axialement dans la partie intermédiaire 50B de la cavité par un anneau élastique 56 intérieur comportant des oreilles 56A venant s'engager dans des orifices 57 du corps, visibles sur les figures 7 et 8, ménagés dans la cavité 50, cette dernière comportant des rainures 57A assurant le guidage des oreilles 56A en direction des orifices 57 lors de l'assemblage des moyens d'étanchéité 54.

Les moyens de verrouillage de la tête 6 comprennent une agrafe élastique 7 avantageusement réalisée dans un fil d'acier inox de diamètre 1 mm, l'agrafe élastique 7 comportant une boucle 70 se prolongeant par deux branches transversales 71 qui, au repos, sont parallèles entre elles, les deux branches transversales 71 venant s'engager dans deux fentes 58 ménagées sur le corps et pouvant occuper une position de verrouillage, illustrée sur la figure 6A, dans laquelle les branches transversales 71 font saillie au travers de la partie primaire 50C de la cavité 50.

Conformément à la figure 7, chaque branche transversale 71 de l'agrafe élastique 7 comporte une extrémité recourbée 72 venant prendre appui sur une surface externe 5A inclinée du corps 5, l'inclinaison des deux surfaces externes 5A étant adaptée pour ramener l'agrafe élastique 7 dans la position de verrouillage lorsque les extrémités recourbées 72 des branches transversales 71 exercent une pression sur les deux surfaces externes 5A.

Conformément à la figure 6B, l'agrafe élastique 7 peut également occuper une position de déverrouillage dans laquelle les branches transversales 71 sont écartées et s'étendent en dehors de la cavité 50, l'agrafe élastique 7 étant amenée dans cette position de déverrouillage en exerçant manuellement une traction sur la boucle 70 de manière à faire glisser les extrémités recourbées 72 le long des surfaces externes 5A jusqu'à ce que les deux extrémités recourbées 72 se trouvent disposées sensiblement à l'opposé l'une de l'autre par rapport à l'axe longitudinal de la cavité 50.

De manière avantageuse, le corps 5 comporte également une butée 59, à l'extrémité de chacune des surfaces externes 5A, sur laquelle l'extrémité recourbée 72 des branches transversales 71 vient prendre appui lorsque l'agrafe élastique 7 occupe la position de déverrouillage illustrée sur la figure 6B, permettant ainsi de limiter la course de l'agrafe élastique 7.

Le fonctionnement du raccord ainsi réalisé va maintenant être décrit.

Lorsque, lors du processus de montage de l'appareil, l'opérateur souhaite connecter le conduit 20 de vapeur à l'électrovanne 4, il amène le corps 5 du raccord dans l'axe de la tête 6 puis engage la tête 6 dans la cavité 50 en exerçant un effort axial sur le corps 5 en direction de l'électrovanne 4 de manière à ce que les branches transversales 71 de l'agrafe élastique 7 s'écartent au passage de la partie tronconique 61 puis s'engagent dans la gorge 62 de la tête 6, ainsi que cela est illustré sur la figure 4, assurant ainsi un verrouillage automatique du corps 5 sur la tête 6.

Dans cette position de verrouillage du raccord, la partie tubulaire 60 se trouve engagée dans la partie terminale 50A de la cavité 50, assurant ainsi un parfait centrage du corps 5 sur la tête 6, l'étanchéité du raccord à la vapeur étant assurée par la présence des deux joints d'étanchéité 54 qui se trouvent alors comprimés entre le corps 5 et la tête 6.

Lors de cette opération de connexion du conduit de vapeur, le verrouillage du raccord présente l'avantage de s'effectuer avec un effort particulièrement réduit du fait de la présence de la boucle 70 dans le prolongement des branches transversales 71 qui garantie une bonne élasticité à l'agrafe élastique 7.

De plus, la boucle 70 constitue une zone de préhension facilement accessible qui permet de déverrouiller aisément le raccord pour déconnecter, si nécessaire, le conduit 20 de vapeur de l'électrovanne 4, ce déverrouillage s'effectuant en exerçant une traction sur la boucle 70 pour amener l'agrafe élastique 7 dans la position de déverrouillage dans laquelle les branches transversales 71 se trouvent écartées l'une de l'autre, l'agrafe élastique 7 étant ramenée automatiquement dans la position de verrouillage, lorsque la boucle 70 est relâchée, par l'effort de rappel exercé par les branches transversales 71 sur les surfaces externes 5A.

L'appareil de repassage ainsi réalisé présente donc l'avantage d'un montage et d'un démontage simplifiés, réduisant ainsi les risques de traumatisme musculo-squelettique chez l'opérateur réalisant la connexion du conduit de vapeur sur l'électrovanne.

De plus, l'utilisation d'un tel raccord permet de fiabiliser la connexion du conduit sur l'électrovanne, le verrouillage du raccord présentant l'avantage d'être à la fois sensitif, grâce au bruit produit par l'agrafe élastique lors de son positionnement dans la gorge, et visuel grâce à la présence des extrémités recourbées visibles à l'extérieur du corps qui permettent à l'opérateur de vérifier le bon verrouillage du raccord.

Enfin, l'utilisation d'un tel raccord permet de gagner du temps dans l'assemblage de l'appareil et donc d'augmenter les cadences de production, l'emmanchement à force du conduit de vapeur sur l'embout de connexion pouvant être effectué en dehors de la chaine d'assemblage de l'appareil, dans un environnement favorable réduisant la pénibilité d'une telle opération.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une autre variante de réalisation non représentée, le corps pourra être démuni de butées limitant la course de l'agrafe élastique.

## Revendications

1. Appareil de repassage comprenant une base (1) génératrice de vapeur reliée par un cordon (2) à un fer à repasser (3), ledit cordon (2) comportant un conduit (20) pour le transport de la vapeur, ledit conduit (20) étant connecté à la base (1) par un raccord rapide comprenant un corps (5) et une tête (6) susceptible d'être reçue axialement dans une cavité (50) du corps (5), le raccord comprenant des moyens de verrouillage automatique (7) de la tête (6) dans le corps dans une position de verrouillage, **caractérisé en ce que** la tête (6) du raccord est portée par une électrovanne (4) fixée sur une cuve (10) pour la génération de vapeur sous pression, le corps (5) du raccord étant solidaire d'une extrémité du conduit (20) pour le transport de la vapeur, ladite tête (6) étant reliée de manière étanche au corps (5) du raccord avec au moins un joint d'étanchéité (54), les moyens de verrouillage automatique comprenant une agrafe élastique (7) portée par le corps (5) du raccord, l'agrafe élastique (7) comportant deux branches transversales (71) de verrouillage venant s'engager élastiquement dans une gorge (62) ménagée sur la tête (6) du raccord.

2. Appareil de repassage selon la revendication 1, **caractérisé en ce que** le corps (5) du raccord comporte un embout de connexion (51) sur lequel l'extrémité du conduit (20) est emmanchée à force, l'embout de connexion (51) comprenant un canal (53) débouchant dans la cavité (50) du corps (5).

3. Appareil de repassage selon l'une quelconque des revendications 1 à 2, **caractérisé en ce que** la tête (6) comporte une partie tronconique (61) en amont de la gorge (62).

4. Appareil de repassage selon l'une quelconque des revendications 1 à 3, **caractérisé en ce que** le corps (50) comporte deux fentes (58) dans lesquelles viennent s'engager les deux branches transversales (71) de l'agrafe élastique (7), l'agrafe élastique (7) pouvant occuper une position de verrouillage dans laquelle les deux branches transversales (71) sont sensiblement parallèles entre elles et s'étendent au travers de la cavité (50) du corps (5).

5. Appareil de repassage selon l'une quelconque des revendications 1 à 4, **caractérisé en ce que** l'agrafe élastique (7) peut occuper une position de déverrouillage dans laquelle les branches transversales (71) sont écartées et s'étendent en dehors de la cavité (50).

6. Appareil de repassage selon la revendication 5, **caractérisé en ce que** l'agrafe élastique (7) comporte une boucle (70), dans le prolongement des branches transversales (71), faisant saillie en dehors du corps (5) et **en ce que** l'agrafe élastique (7) peut être amenée de la position de verrouillage à la position de déverrouillage en exerçant une traction sur la boucle (70).

7. Appareil de repassage selon l'une quelconque des revendications 1 à 6, **caractérisé en ce que** lesdites branches transversales (71) comportent une extrémité recourbée (72) prenant appui sur une surface externe (5A) du corps (5).

8. Appareil de repassage selon la revendication 7, **caractérisé en ce que** le corps comporte une butée (59) en saillie sur laquelle l'extrémité recourbée (72) des branches transversales (71) vient prendre appui lorsque l'agrafe élastique (7) occupe la position de déverrouillage.

9. Appareil de repassage selon la revendication 8, **caractérisé en ce que** les butées (59) sont disposées de telle sorte que les extrémités recourbées (72) des branches transversales (71) se trouvent dans une position diamétralement opposée par rapport à l'axe longitudinal de la cavité (50) lorsque les extrémités recourbées (72) sont en appui contre la butée (59).

10. Appareil de repassage selon la revendication 9, **caractérisé en ce que** le corps (5) du raccord comprend deux joints toriques (54) séparés l'un de l'autre par une entretoise (55) et maintenus dans la cavité (50) du corps (5) par un anneau élastique (56).

## Patentansprüche

1. Bügelgerät, das einen als Dampferzeuger ausgebildeten Sockel (1) umfasst, der durch eine Kordel (2) mit einem Bügeleisen (3) verbunden ist, wobei die Kordel (2) eine Leitung (20) für den Transport von Dampf aufweist, wobei die Leitung (20) an der Basis (1) durch einen Schnellanschluss verbunden ist, der einen Körper (5) und einen Kopf (6) umfasst, der geeignet ist, axial in einem Hohlraum (50) des Körpers (5) aufgenommen zu werden, wobei der Anschluss automatische Mittel (7) zur Verriegelung des Kopfes (6) in dem Körper in einer Verriegelungsstellung umfasst, **dadurch gekennzeichnet, dass** der Kopf (6) des Anschlusses durch ein Magnetventil (4) getragen wird, das an einem Behälter (10) zur Erzeugung von Dampf unter Druck befestigt ist, wobei der Körper (5) des Anschlusses fest mit einem Ende der Leitung (20) für den Transport von Dampf verbunden ist, wobei der Kopf (6) auf dichte Weise mit dem Körper (5) des Anschlusses mit mindestens einer Dichtung (54) verbunden ist, wobei die automatischen Mittel zur Verriegelung eine elastische Klammer (7) umfassen, die von dem Körper (5) des Anschlusses getragen wird, wobei die elastische Klammer (7) zwei transversale Arme (71) zur Verriegelung umfasst, die elastisch in eine Ausnehmung (62) eingreifen, die auf dem Kopf (6) des Anschlusses ausgebildet ist.

2. Bügelgerät nach Anspruch 1, **dadurch gekennzeichnet, dass** der Körper (5) des Anschlusses einen Verbindungsstutzen (51) aufweist, auf dem das Ende der Leitung (20) aufgepresst ist, wobei der Verbindungsstutzen (51) einen Kanal (53) umfasst, der in dem Hohlraum (50) des Körpers (5) mündet.

3. Bügelgerät nach einem der Ansprüche 1 bis 2, **dadurch gekennzeichnet, dass** der Kopf (6) einen kegelstumpfförmigen Abschnitt (61) stromaufwärts von der Nut (62) aufweist.

4. Bügelgerät nach einem der Ansprüche 1 bis 3, **dadurch gekennzeichnet, dass** der Körper (50) zwei Schlitze (58) aufweist, in die die beiden transversalen Arme (71) der elastischen Klammer (7) eingreifen , wobei die elastische Klammer (7) eine Verriegelungsstellung einnehmen kann, in der die beiden transversalen Arme (71) im Wesentlichen parallel zueinander sind und sich durch den Hohlraum (50) des Körpers (5) erstrecken.

5. Bügelgerät nach einem der Ansprüche 1 bis 4, **dadurch gekennzeichnet, dass** die elastische Klammer (7) eine Entriegelungsstellung einnehmen kann, in der die transversalen Arme (71) beabstandet sind und sich außerhalb des Hohlraums (50) erstrecken.

6. Bügelgerät nach Anspruch 5, **dadurch gekennzeichnet, dass** die elastische Klammer (7) eine Öse (70) in der Verlängerung der transversalen Arme (71) aufweist, die außerhalb des Körpers (5) hervorsteht, und dass die elastische Klammer (7) aus der Verriegelungsstellung in die Entriegelungsstellung durch Ausüben von Zug auf die Öse (70) gebracht werden kann.

7. Bügelgerät nach einem der Ansprüche 1 bis 6, **dadurch gekennzeichnet, dass** die transversalen Arme (71) ein umgebogenes Ende (72) aufweisen, das auf einer Außenfläche (5A) des Körpers (5) anliegt.

8. Bügelgerät nach Anspruch 7, **dadurch gekennzeichnet, dass** der Körper einen hervorstehenden Anschlag (59) aufweist, auf dem das umgebogene Ende (72) der transversalen Arme (71) anliegt, wenn die elastische Klammer (7) die Entriegelungsstellung einnimmt.

9. Bügelgerät nach Anspruch 8, **dadurch gekennzeichnet, dass** die Anschläge (59) so angeordnet sind, dass sich die umgebogenen Enden (72) der transversalen Arme (71) in einer diametral entgegengesetzten Position in Bezug auf die Längsachse des Hohlraums (50) befinden, wenn die umgebogenen Enden (72) an dem Anschlag (59) anliegen.

10. Bügelgerät nach Anspruch 9, **dadurch gekennzeichnet, dass** der Körper (5) des Anschlusses zwei O-Ringdichtungen (54) aufweist, die voneinander durch einen Abstandshalter (55) getrennt sind, und in dem Hohlraum (50) des Körpers (5) durch einen elastischen Ring (56) beibehalten werden.

## Claims

1. Ironing appliance comprising a steam generating base (1) connected by a cord (2) to an iron (3), said cord (2) comprising a conduit (20) for transporting steam, said conduit (20) being connected to the base (1) by a quick connector comprising a body (5) and a head (6) able to be axially received in a cavity (50) of the body (5), with the connector comprising means for automatically locking (7) the head (6) in the body in a locked position, **characterised in that** the head (6) of the connector is carried by a solenoid valve (4) fixed on a tank (10) for the generation of pressurised steam, the body (5) of the connector being integral with an end of the conduit (20) for transporting steam, said head (6) being connected in a sealed manner to the body (5) of the connector with at least one seal (54), with the means for automatically locking comprising an elastic clasp (7) carried by the body (5) of the connector, with the elastic clasp (7) comprising two transverse locking branches (71) engaging elastically in a groove (62) arranged on the head (6) of the connector.

2. Ironing appliance according to claim 1, **characterised in that** the body (5) of the connector comprises a connection tip (51) whereon the end of the conduit (20) is force fitted, with the connection tip (51) comprising a channel (53) opening into the cavity (50) of the body (5).

3. Ironing appliance according to any of claims 1 to 2, **characterised in that** the head (6) comprises a tapered portion (61) upstream from the groove (62).

4. Ironing appliance according to any of claims 1 to 3, **characterised in that** the body (50) comprises two slots (58) wherein the two transverse branches (71) of the elastic clasp (7) are engaged, with the elastic clasp (7) able to occupy a locked position wherein the two transverse branches (71) are substantially parallel with one another and extend through the cavity (50) of the body (5).

5. Ironing appliance according to any of claims 1 to 4, **characterised in that** the elastic clasp (7) can occupy an unlocked position wherein the transverse branches (71) are separated and extend beyond the cavity (50).

6. Ironing appliance according to claim 5, **characterised in that** the elastic clasp (7) comprises a loop (70), in the extension of the transverse branches (71), protruding outside of the body (5) and **in that** the elastic clasp (7) can be brought from the locked position to the unlocked position by exerting traction on the loop (70).

7. Ironing appliance according to any of claims 1 to 6, **characterised in that** said transverse branches (71) comprise a curved end (72) bearing against an outer surface (5A) of the body (5).

8. Ironing appliance according to claim 7, **characterised in that** the body comprises a protruding abutment (59) whereon the curved end (72) of the transverse branches (71) press against when the elastic clasp (7) occupies the unlocked position.

9. Ironing appliance according to claim 8, **characterised in that** the abutments (59) are arranged in such a way that the curved ends (72) of the transverse branches (71) are in a position diametrically opposite in relation to the longitudinal axis of the cavity (50) when the curved ends (72) are pressing against the abutment (59).

10. Ironing appliance according to claim 9, **characterised in that** the body (5) of the connector comprises two 0-ring seals (54) separated from one another by a spacer (55) and maintained in the cavity (50) of the body (5) by an elastic ring (56).
